# EUROPÄISCHE PATENTANMELDUNG

(11) **EP 4 047 228 A1**
(43) Veröffentlichungstag der Anmeldung: **24.08.2022**
(21) Anmeldenummer: 21158704.3
(22) Anmeldetag: 23.02.2021
(51) Int. Cl.: F16C 17/10, F16C 23/04, F16C 27/02, F16C 27/06

(54) **LAGERANORDNUNG, GENERATORGETRIEBE, WINDKRAFTANLAGE UND COMPUTERPROGRAMMPRODUKT**

(71) Anmelder: Flender GmbH, 46395 Bocholt (DE)
(72) Erfinder: Deicke, Matthias, 31311 Uetze / Schwüblingsen (DE); Dinter, Ralf Martin, 45888 Gelsenkirchen (DE); Meyer, Thomas, 52223 Stolberg (DE); Vennemann, Michael, 48703 Stadtlohn (DE); Wiersch, Petra, 46397 Bocholt (DE)
(74) Vertreter: Michalski Hüttermann & Partner Patentanwälte mbB

(57) **Zusammenfassung**

Die Erfindung betrifft eine Lageranordnung (40) für eine Rotorwelle (20) einer Generatoreinheit (10), die ein kippmomentaufnehmendes Lager (41) mit einer inneren und einer äußeren Lagerhülse (44, 46) umfasst. Dieses ist zu einem Aufnehmen eines auf einen Generatorrotor (12) einwirkenden Kippdrehmoments (13) ausgebildet. Erfindungsgemäß ist das Lager (41) als Kegelgleitlager (42) ausgebildet. Die Erfindung betrifft auch ein Generatorgetriebe (50), das eine Getriebeeinheit (30) umfasst, die in einem Gehäuse (31) mit einer Generatoreinheit (10) mit einem Generatorrotor (12) angeordnet ist. Dabei ist der Generatorrotor (12) drehfest auf einer Rotorwelle (20) angebracht. Erfindungsgemäß ist die Rotorwelle (20) in einer korrespondierenden Lageranordnung (40) drehbar aufgenommen. Des Weiteren betrifft die Erfindung eine Windkraftanlage (70), die über ein solches Generatorgetriebe (50) verfügt. Ebenso betrifft die Erfindung ein Computerprogrammprodukt (80), das zu einem Simulieren eines Betriebsverhaltens einer entsprechenden Lageranordnung (40) ausgebildet ist.

## Beschreibung

Die Erfindung betrifft eine Lageranordnung zur drehbaren Lagerung einer Rotorwelle und ein Generatorgetriebe, das über eine derartige Lageranordnung verfügt. Die Erfindung betrifft auch eine Windkraftanlage, die mit einem solchen Generatorgetriebe ausgestattet ist. Ferner betrifft die Erfindung ein Computerprogrammprodukt, das zu einem Simulieren eines Betriebsverhaltens einer solchen Lageranordnung ausgebildet ist.

Die Europäische Patentanmeldung EP 2 933 483 A1 offenbart ein Antriebssystem einer Windkraftanlage, die ein mehrstufiges Planetengetriebe umfasst, das mit einem Generator verbunden ist. Der Generator weist eine Rotorwelle auf, die durch eine Planetenstufe antreibbar ist und an beiden Enden drehbar in Lagern aufgenommen ist. Die Rotorwelle des Generators ist dabei in Gleitlagern aufgenommen.

Aus der Internationalen Anmeldung WO 2019/020213 A1 ist ein Gleitlager bekannt, das zu einer Lagerung einer Rotornabe einer Windkraftanlage ausgebildet ist, die im Betrieb wechselnden Windlasten unterworfen ist. Das Gleitlager ist als konisches Gleitlager ausgebildet, das mit ihren Spitzen aufeinander weisende Konus-Elemente umfasst.

Aus dem Konferenzbeitrag "Sliding moment bearing as a main bearing in wind turbine generators", Conference for Wind Power Drives 2017, Aachen, von Tim Schröder, Georg Jacobs und Dennis Bosse, Rheinisch-Westfälische Technische Hochschule Aachen, sind doppelkegelige Gleitlager bekannt, die zur Lagerung einer Rotorwelle dienen.

Im Bereich der Windkraftanlagentechnik besteht das Bestreben, Generatorgetriebe, also Getriebe mit integrierten Generatoren, mit steigenden Nennleistungen bereitzustellen, die gleichzeitig zuverlässig, gewichtssparend, kompakt und kosteneffizient sind. Lagerungen in solchen Anwendungen sind erhöhten mechanischen Beanspruchungen unterworfen. Der Erfindung liegt die Aufgabenstellung zugrunde, eine Lageranordnung bereitzustellen, die in zumindest einem der beschriebenen Aspekte eine Verbesserung bietet.

Die Aufgabenstellung wird durch eine erfindungsgemäße Lageranordnung gelöst, die dazu ausgebildet ist, eine Rotorwelle einer Generatoreinheit drehbar zu lagern. Über die Rotorwelle ist somit ein Generatorrotor der Generatoreinheit antreibar. Die Lageranordnung ist dazu ausgebildet, die Rotorwelle gegenüber einer Gehäusewandung, die zur Generatoreinheit gehören kann, drehbar zu lagern. Die Lageranordnung umfasst zumindest ein Lager, das dazu geeignet ist, ein Kippmoment aufzunehmen, das auf die Rotorwelle ausgeübt wird. Das Kippmoment ist unter anderem durch das Eigengewicht des Generatorrotors der Generatoreinheit hervorrufbar. Erfindungsgemäß ist das Lager als zumindest ein Kegelgleitlager ausgebildet. Das Kegelgleitlager erlaubt es in vorteilhafter Weise, erhöhte Kippmomente aufzunehmen und dabei die Rotorwelle präzise ausgerichtet zu lagern. Rotorwellen von Generatoren weisen im Betrieb höhere Drehzahlen auf als beispielsweise Mehrblattrotoren von Windkraftanlagen. Im Zusammenwirken mit dem Eigengewicht des Generatorrotors und entsprechenden Drehzahlen können entsprechend erhöhte Kippmomente auf die Rotorwelle hervorgerufen werden. Der Erfindung liegt unter anderem die überraschende Erkenntnis zugrunde, dass Kegelgleitlager eine hinreichende Tragfähigkeit aufweisen, die auch das Aufnehmen von erhöhten Kippmomenten, die von einem Generatorrotor hervorgerufen werden, erlauben. Dementsprechend ermöglicht die erfindungsgemäße Lageranordnung die Verwendung von Generatorrotoren mit erhöhter Nenndrehzahl. Hierdurch wiederum sind Generatoreinheiten mit einer reduzierten Anzahl an Polpaaren einsetzbar, was eine Gewichtsersparnis erlaubt. Darüber hinaus sind Radialauslenkungen des Generatorrotors im Betrieb reduzierbar. Infolgedessen wird ein Berühren eines Generatorstators durch den Generatorrotor auch bei reduzierten Generatorluftspalten vermieden. Durch einen reduzierten, also in Radialrichtung verkleinerten, Generatorluftspalt ist die Effizienz der Generatoreinheit steigerbar. Insgesamt dient die erfindungsgemäße Lageranordnung durch das als Kegelgleitlager ausgebildete Lager zu einer Erhöhung einer Nenndrehzahl des Generatorrotor, einer Gewichtsersparnis in der Generatoreinheit und/oder einer Reduzierung eines Generatorluftspalts. Darüber hinaus bietet das als Kegelgleitlager ausgebildete Lager eine gesteigerte Robustheit beim Einstellen.

In einer Ausführungsform der beanspruchten Lageranordnung ist das Lager zu einem Abstützen von Axialkräften und /oder Radialkräften ausgebildet, die auf die Rotorwelle einwirken können. Unter einer Axialrichtung ist hierbei im Wesentlichen parallel zu einer Drehachse der Rotorwelle zu verstehen, unter einer Radialrichtung jegliche Richtung im Wesentlichen senkrecht zur Axialrichtung. Die Axialkräfte und/oder Radialkräfte sind im Betrieb durch den Generatorrotor hervorrufbar. Zu den Radialkräften gehört unter anderen die Gewichtskraft, die durch das Eigengewicht des Generatorrotors hervorgerufen wird. Bei einer geneigten Einbaulage der Lageranordnung kann durch das Eigengewicht des Generatorrotors auch eine Axialkraft auf die Rotorwelle hervorgerufen werden. Ferner kann eine Axialkraft auch durch eine Kraft aus einer Verzahnung, beispielsweise einer Schrägverzahnung, hervorgerufen werden, die mit der Rotorwelle zusammenwirkt. Des Weiteren können Radialkräfte auch durch Kreiselkräfte hervorgerufen werden, die sich im Betrieb einstellen. Kegelgleitlager bieten vorteilhafte Tragfähigkeit bei Axialkräften und Radialkräften und erlauben so eine exakte Positionierung der Rotorwelle, und damit auch des Generatorrotors. Darüber hinaus wird die Auslegung einer solchen Lageranordnung, beispielsweise bei einer vorgesehenen Verwendung in einer Windkraftanlage vereinfacht. Insbesondere ist die Auslegung separater Radiallager und Axiallager entbehrlich, wodurch sich ebenso eine vereinfachte Schmierstoffversorgung ergibt. Hierdurch wird die Bauteilanzahl in der beanspruchten Lageranordnung reduziert.

Ebenso kann in der beanspruchten Lageranordnung das Kegelgleitlager eine erste und eine zweite innere Lagerhülse aufweisen. Korrespondierend dazu kann das Kegelgleitlager auch eine erste und zweite äußere Lagerhülse aufweisen. Die inneren und äußeren Lagerhülsen wirken jeweils zusammen und stellen so paarweise bereits separate Kegelgleitlager dar. Zwischen den inneren und äußeren Lagerhülsen ist jeweils durch eine entsprechende Schmierstoffzufuhr im Betrieb ein Schmierstofffilm ausbildbar, durch den das Prinzip eines Gleitlagers verwirklicht wird. Die erste und zweite innere Lagerhülse können axial hintereinander angeordnet sein, insbesondere unmittelbar zueinander benachbart. Die erste und zweite Lagerhülse können alternativ auch einstückig ausgebildet sein und somit in Axialrichtung unterschiedliche Abschnitte einer einzigen Komponente sein. Korrespondierend dazu können die erste und zweite äußere Lagerhülse axial hintereinander, insbesondere unmittelbar zueinander benachbart, angeordnet sein. Gleichermaßen können die erste und zweite äußere Lagerhülse einstückig ausgebildet sein. Das Kegelgleitlager ist dadurch in Differentialbauweise herstellbar, was ein hohes Maß an Fertigungspräzision bietet. Eine gesteigerte Fertigungspräzision am Kegelgleitlager wiederum gewährleistet eine verbesserte Laufruhe und reduzierten Verschleiß im Betrieb, also erhöhte Zuverlässigkeit. Ebenso wird eine axiale Einstellung für die Rotorwelle in einfacher Weise ermöglicht.

In einer weiteren Ausführungsform der beanspruchten Lageranordnung können die erste und zweite innere Lagerhülse als jeweils aufeinander zuweisende Kegel oder Kegelstümpfe ausgebildet sein. Hieraus ergibt sich für die erste und zweite innere Lagerhülse im Wesentlichen eine Sanduhrform. Die erste und zweite äußere Lagerhülse können die dazu komplementäre Form aufweisen. Aufgrund deren konischer Form ergibt sich in Axialrichtung an diesen eine Stützwirkung, wo eine innere Lagerhülse gegen eine äußere Lagerhülse gedrückt wird. Des Weiteren ergeben sich bei einem einwirkenden Kippmoment zwischen den äußeren und inneren Lagerhülsen eine vergrößerte Stützfläche. Einem sogenannten Kantentragen wird dadurch, insbesondere in Verbindung mit einer geeigneten Profilierung, vorgebeugt, so dass die beanspruchte Lageranordnung auch erhöhte Kippmomente aufnehmen kann. Des Weiteren wird eine bidirektional wirkende Abstützung entlang der Axialrichtung und der Radialrichtung verwirklicht. Die beanspruchte Lageranordnung erlaubt es dadurch, auch Generatorrotoren mit erhöhten Drehzahlen zu lagern, bei denen entsprechend erhöhte Unwuchten und Kreiselkräfte in jegliche Richtung auftreten können. Durch die erhöhten erträglichen Nenndrehzahlen des Generatorrotors kann die Anzahl an Polpaaren reduziert werden. Ferner bieten Gleitlager, insbesondere Kegelgleitlager, bei erhöhten Drehzahlen ein besonders vorteilhaftes Dämpfungsverhalten. Die oben skizzierten Vorzüge der beanspruchten Lageranordnung werden somit in gesteigertem Ausmaß erzielt. Die innere Lagerhülse kann einstückig die erste und zweite innere Lagerhülse umfassen und als unmittelbar verbundene aufeinander weisende Kegelstümpfe ausgebildet sein. Die Verwendung einer derartigen doppelten Kegelstumpfform ermöglicht es, die beanspruchte Lageranordnung in Axialrichtung besonders kompakt auszubilden.

Ferner kann zumindest eine der inneren oder äußeren Lagerhülsen eine Mehrzahl von Segmenten umfassen, die jeweils als Lagersegment dienen. Die Mehrzahl an Segmenten ist dabei umlaufend angeordnet und bilden so funktionell die innere bzw. äußere Lagerhülse. Die Segmente sind separat fertigbar, wodurch das Prinzip der Differentialbauweise weiter verwirklicht wird. Insbesondere ist die Fertigung der Lageranordnung so ohne Präzisionsverluste parallel gestaltbar, was eine beschleunigte Herstellung erlaubt. Der Aufbau der inneren bzw. äußeren Lagerhülse ermöglicht im Schadensfall eine vereinfachte und zielgerichtete Reparatur durch Austauschen einzelner Segmente. Ebenso wird der Aufbau eines Schmierkeils über das gesamte jeweilige Kegelgleitlager hinweg ermöglicht. Ferner ist ein Zwischenraum zwischen den Segmenten zu einem Sammeln und Rückführen von Schmierstoff nutzbar, der an den Rändern der Segmente austritt. Dazu können die Segmente im Wesentlichen trapezförmig ausgebildet sein, insbesondere in Form von gewölbten Trapezflächen.

Darüber hinaus können zumindest zwei benachbarte Segmente, beispielsweise in Umfangsrichtung benachbart angeordnete Segmente, dazu ausgebildet sein, während des Betriebs gleichzeitig Schmierstofffilme mit unterschiedlichen Schmierstofffilmdicken bereitzustellen. Dazu können die Segmente im Wesentlichen senkrecht zu seiner mit Schmierstoff benetzten Oberfläche, beispielsweise einer Innenfläche oder Außenfläche, unterschiedliche Rücknahmen, also Materialrücknahmen, aufweisen. Alternativ oder ergänzend können die zumindest zwei benachbart angeordneten Segmente auch zueinander mit einem Radialversatz im Kegelgleitlager angebracht sein. Dadurch ist in einer Vielzahl an Belastungssituationen, also bei unterschiedlichen relativen Auslenkungen im Kegelgleitlager in Axialrichtung, Radialrichtung oder durch Verkippen durch ein Kippmoment, zumindest abschnittsweise ein Schmierstofffilm mit einer angestrebten Schmierstofffilmdicke herstellbar. Insbesondere ist über derartige benachbarte Segmente eine Profilierung im entsprechenden Kegelgleitlager herstellbar, durch die Deformationen und/oder ungleichmäßige Lastaufteilungen kompensierbar sind. Alternativ oder ergänzend können die zumindest zwei benachbarten Segmente dazu ausgebildet sein, unterschiedliche Schmierkeile auszubilden. Unter dem Schmierkeil ist die Form des Schmierstofffilms im Bereich eines Gleitlagerkontakts in einer Querschnittsansicht zu verstehen. Weiter alternativ oder ergänzend können die Segmente auch bereichsweise dazu ausgebildet sein, Schmierstofffilme von unterschiedlicher Schmierstofffilmdicke und/oder unterschiedliche Schmierkeile auszubilden. Dadurch ist beispielsweise ein sogenanntes Kantentragen vermeidbar. In Abhängigkeit von der sich je Segment oder bereichsweise an einem Segment einstellenden Schmierstofffilmdicke ergibt sich beispielsweise ein unterschiedlicher Schmierstoffbedarf, eine unterschiedliche Wärmeentwicklung und/oder ein unterschiedliches Verschleißverhalten. Diese Aspekte gehören zu einem Betriebsverhalten der Lageranordnung.

Des Weiteren kann zumindest eines der umlaufend angeordneten Segmente als Federelement ausgebildet sein, das senkrecht zum dort ausgebildeten Schmierstofffilm elastisch ist. Durch die Kegelform des Kegelgleitlagers ist die mit Schmierstoff benetzte Oberfläche des Segments dazu geeignet, in Axialrichtung und Radialrichtung zu federn und gegenüber der Drehachse der Rotorwelle seine Ausrichtung durch entsprechendes Andrücken der komplementären inneren bzw. äußeren Lagerhülse selbsttätig anzupassen. Durch die Elastizität ist das Kegelgleitlager dazu geeignet, auch abrupte Auslenkungen zwischen der äußeren und inneren Lagerhülse aufzunehmen und ein hartes Anschlagen zu vermeiden. Ebenso ist beispielsweise bei einem Einwirken eines Kippmoments im Bereich des entsprechenden Segments ein Kantentragen vermeidbar. Die beanspruchte Lageranordnung weist folglich auch in Betriebssituationen, die mit erhöhten Beanspruchungen einhergehen, ein zuverlässiges und verschleißarmes Betriebsverhalten auf.

Ferner kann zumindest eines der Segmente als Doppelbiegesegment ausgebildet sein, das zumindest zwei Ringelemente umfasst, die in einem Randbereich miteinander verbunden sind. Die Ringelemente wirken in einem Längsschnitt betrachtet als Schenkel eines in Axialrichtung und Radialrichtung wirkenden Federmechanismus. Die Ringelemente bilden in Umfangrichtung betrachtet zusammen einen Ring im Kegelgleitlager. Derartige Doppelbiegesegmente erfordern ein Minimum an Bauteilen und sind folglich in einfacher Weise herstellbar. Ein Ringelement, das im Betrieb an seiner Oberfläche mit Schmierstoff benetzt ist, ist dadurch aus einem Werkstoff herstellbar, der vorteilhafte Gleiteigenschaften aufweist und/oder nach längerem Betrieb eine erhöhte Maßhaltigkeit aufweist. Beispielsweise ist so dauerhaft eine für den Gleitlagerbetrieb vorteilhafte Geometrie herstellbar. Unter anderem kann an der Oberfläche des entsprechenden Segments ein Schmierkeilverhältnis von 1:50 bis 1:1000 gewährleistet werden. Ein Ringelement, das im Betrieb an seiner Oberfläche nicht mit Schmierstoff benetzt ist, ist aus einem Werkstoff mit vorteilhaften Federeigenschaften herstellbar. Dadurch ist ein funktionsgerechter Werkstoffeinsatz möglich, der ein gesteigertes Maß an Leistungsfähigkeit bietet und auch zu einer erhöhten Kosteneffizienz führt.

In einer weiteren Ausführungsform der beanspruchten Lageranordnung sind die innere Lagerhülse and ihrer Außenfläche ovalisiert ausgebildet. Alternativ oder ergänzend kann auch eine äußere Lagerhülse an ihrer Innenfläche ovalisiert ausgebildet sein. Unter einer ovalisierten Form ist hierbei im Querschnitt eine Abweichung von der Kreisform zu verstehen. Durch eine entsprechend ovalisierte Form ist eine Verbesserung der Gleiteigenschaften, beispielsweise eine Vergrößerung des Schmierstofffilms im Kegelgleitlager, erreichbar. Das Kegelgleitlager ist daher für einen vorrangig zu erwartenden Betriebszustand anpassbar, wodurch die Lebensdauer der beanspruchten Lageranordnung weiter gesteigert wird. Die beanspruchte Lageranordnung ist infolgedessen besonders für Windkraftanlagen, beispielsweise Offshore-Windkraftanlagen, geeignet.

Darüber hinaus kann die beanspruchte Lageranordnung die Rotorwelle selbst umfassen. Die Rotorwelle kann dabei fliegend in der beanspruchten Lageranordnung gelagert sein. Dementsprechend liegt ein Angriffspunkt für mechanische Beanspruchungen, die auf die Rotorwelle einwirken, beispielsweise Axialkräfte, Radialkräfte und Kippmomente, außerhalb der Lageranordnung. Dadurch ist insbesondere eine zweite Lageranordnung, die axial auf einer der beanspruchten Lageranordnung abgewandten Seite des Generatorrotors anzubringen wäre, entbehrlich. Die beanspruchte Lageranordnung bietet eine belastbare, zuverlässige und langlebige Möglichkeit, eine Rotorwelle drehbar zu lagern, so dass bei einer Verwendung, beispielsweise in einer Windkraftanlage, insgesamt der Montageaufwand reduziert ist. Durch die Reduzierung der Bauteile wird auch das Risiko eines Ausfalls einer einzelnen Komponente reduziert.

Des Weiteren können die erste und zweite innere Lagerhülse unterschiedliche Kegelwinkel aufweisen. Unter dem Kegelwinkel ist hierbei der Winkel an der Kegelspitze in einer zweidimensionalen Projektion des Kegels bzw. des zum Kegel ergänzten Kegelstumpfs zu verstehen. Durch die axial benachbarte Anordnung der ersten und zweiten inneren Lagerhülse ist dadurch das Reaktionsverhalten der Lageranordnung richtungsabhängig einstellbar, insbesondere gegen Axialkräfte. Die beanspruchte Lageranordnung ist dadurch konstruktiv in einfacher Weise an eine breite Spanne von möglichen Betriebszuständen anpassbar. Das Einsatzspektrum der beanspruchten Lageranordnung wird so weiter vergrößert.

Ferner kann die Rotorwelle der beanspruchten Lageranordnung unmittelbar über eine Planetenstufe antreibbar ausgebildet sein. Die Rotorwelle kann dazu an einem dem Generatorrotor abgewandten Ende mit einem Sonnenrad der Planetenstufe zusammenwirken oder einstückig mit diesem ausgebildet sein. Unter einem unmittelbaren Antreiben ist hierbei zu verstehen, dass die Rotorwelle einer Drehung einer Ausgangswelle der Getriebestufe folgt, zwischen diesen also höchstens ein minimaler Winkelversatz vorliegen kann. Die beanspruchte Lageranordnung ist in besonderer Weise als Lager für eine Rotorwelle einer Generatoreinheit eines Generatorgetriebes geeignet.

Die Aufgabenstellung wird ebenso durch ein erfindungsgemäßes Generatorgetriebe gelöst. Das Generatorgetriebe umfasst eine Getriebeeinheit, die zumindest eine Planetenstufe umfasst. Die Getriebeeinheit ist mit einer Hauptwelle, beispielsweise einer Hauptwelle einer Windkraftanlage, drehmomentübertragend verbindbar um eine Antriebsleistung zuzuführen. Die Generatoreinheit ist im gleichen Gehäuse wie die Getriebeeinheit aufgenommen und ist mit der Getriebeeinheit abtriebsseitig drehmomentübertragend verbunden. Die Generatoreinheit umfasst einen Generatorrotor, der drehbar in der Generatoreinheit angeordnet ist. Dabei ist der Generatorrotor drehfest auf einer Rotorwelle angebracht. Die Rotorwelle ist im Gehäuse des Generatorgetriebes aufgenommen. Die Rotorwelle ist dabei erfindungsgemäß in einer Lageranordnung drehbar aufgenommen, die nach einer der oben skizzierten Ausführungsformen ausgebildet ist. Derartige Generatorgetriebe, die auch als Hybrid Drives bezeichnet werden, sind durch die beanspruchte Lageranordnung gewichtssparend, zuverlässig und -einfach zu montieren. Ferner sind durch die beanspruchte Lageranordnung unter anderem Axialkräfte aufnehmbar, die durch die zumindest eine Planetenstufe hervorgerufen werden, die mit der Rotorwelle drehmomentübertragend verbunden ist.

In einer Ausführungsform des beanspruchten Generatorgetriebes weist dieses eine Strombelastbarkeit auf, die zumindest dem 20-fachen bis 60-fachen, bevorzugt dem 30-fachen bis 50-fachen, weiter bevorzugt dem 37-fachen bis 43-fachen, einer Strombelastbarkeit eines Referenzwälzlagers entspricht. Unter dem Referenzwälzlager ist ein Wälzlager, beispielsweis ein Kegelrollenwälzlager zu verstehen, das unter mechanischen Gesichtspunkten dazu geeignet ist, das Lager zu ersetzen, also substitutionsfähig ist. Das weist das Referenzwälzlager gleiche Innen- und Außendurchmesser und axiale Länge auf. Ebenso weist das Referenzwälzlager eine gleiche dynamische Tragfähigkeit auf wie das Lager und gleiche Abstände, die die Aufnahmefähigkeit für Kippmoment charakterisiert. Im beanspruchten Generatorgetriebe ist insbesondere durch das Kegelgleitlager eine erhöhte Gleitfläche nutzbar, durch die wiederum eine gesteigerte Strombelastbarkeit erzielt wird.

Die Erfindung wird im Folgenden anhand einzelner Ausführungsformen in Figuren näher erläutert. Die Figuren sind insoweit in gegenseitiger Ergänzung zu lesen, dass gleiche Bezugszeichen in unterschiedlichen Figuren die gleiche technische Bedeutung haben. Die Merkmale der einzelnen Ausführungsformen sind untereinander auch kombinierbar. Ferner sind die in den Figuren gezeigten Ausführungsformen mit den oben skizzierten Merkmalen kombinierbar. Es zeigen im Einzelnen:
- FIG 1: schematisch eine erste Ausführungsform der beanspruchten Lageranordnung im Längsschnitt;
- FIG 2: eine äußere Lagerhülse für eine zweite Ausführungsform der beanspruchten Lageranordnung in einer Stirnansicht;
- FIG 3: schematisch eine dritte Ausführungsform der beanspruchten Lageranordnung in einer Detailansicht im Längsschnitt;
- FIG 4: schematisch eine vierte Ausführungsform der beanspruchten Lageranordnung in einer Detailansicht im Längsschnitt;
- FIG 5: schematisch eine fünfte Ausführungsform der beanspruchten Lageranordnung in einer Detailansicht im Längsschnitt;
- FIG 6: schematisch eine Ausführungsform einer beanspruchten Windkraftanlage in einer geschnittenen Schrägansicht.

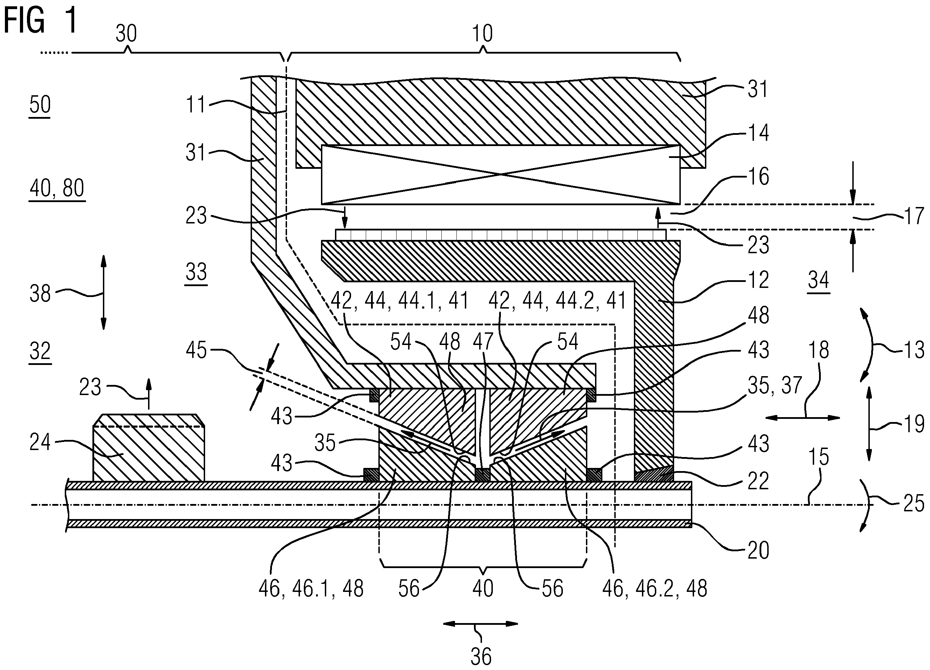

In FIG 1 ist schematisch der Aufbau einer ersten Ausführungsform der beanspruchten Lageranordnung 40 in einem Längsschnitt dargestellt. Die Lageranordnung 40 ist einem Gehäuse 31 einer Getriebeeinheit 30 angeordnet, die zu einem Generatorgetriebe 50 gehört. Die Lageranordnung 40 umfasst eine Rotorwelle 20, die um eine Hauptdrehachse 15 drehbar ist, über die eine Antriebsleistung 25 transportierbar ist. An einem Ende auf einer Antriebsseite 32 ist die Rotorwelle 20, die als Hohlwelle ausgebildet ist, mit einem Sonnenrad 24 drehfest verbunden, das zu einer Planetenstufe 33 der Getriebeeinheit 30 gehört. An einem Ende der Rotorwelle 20 auf einer Abtriebsseite 34 ist ein Generatorrotor 12 einer Generatoreinheit 10 über ein Befestigungsmittel 22 drehfest verbunden. Eine funktionale Trennlinie zwischen der Generatoreinheit 10 und der Getriebeeinheit 30 sind in FIG 1 durch die Linie mit dem Bezugszeichen 11 versinnbildlicht. Die Generatoreinheit 10 und die Getriebeeinheit 30 bilden zusammen ein Generatorgetriebe 50, in dem die Generatoreinheit 10 und die Getriebeeinheit 30 in einem Gehäuse 13 aufgenommen sind. Zur Lageranordnung 40 gehören auch zwei Lager 41, das zwei Kegelgleitlager 42 umfasst. Die Kegelgleitlager 42 umfassen jeweils eine äußere Lagerhülse 44 und eine innere Lagerhülse 46, zwischen denen jeweils ein Schmierstofffilm 37 ausbildbar ist. Im bestimmungsgemäßen Betrieb der Lageranordnung 40 sind Außenflächen 56 der inneren Lagerhülsen 46 und Innenflächen 54 der äußeren Lagerhülsen 44 mit Schmierstoff 35 benetzt, durch den der Schmierstofffilm 37 gebildet wird. Dadurch wird an den Kegelgleitlagern 42 das Prinzip eines Gleitlagers verwirklicht. In Abhängigkeit von vorliegenden Lasten an den Kegelgleitlagern 42 ergibt sich für den Schmierstofffilm 37 eine Schmierstofffilmdicke 45. Eine erste und zweite innere Lagerhülse 46.1, 46.2 weisen im Wesentlichen eine Kegelstumpfform 48 auf, wobei diese aufeinander weisen. Die zugehörige erste und zweite Lagerhülse 44.1, 44.2 sind komplementär dazu ausgebildet. Die erste und zweite innere Lagerhülse 46.1, 46.2 sind durch eine Distanzelement 47 voneinander beabstandet und durch Sicherungsmittel 43 auf der Rotorwelle 20 axial festgehalten. Infolgedessen ist die Lageranordnung 40 dazu geeignet, mittels der Kegelgleitlager 42 ein Kippmoment 13 aufzunehmen. Das Kippmoment 13 ist durch das Eigengewicht des Generatorrotors 12 hervorrufbar, der drehbar um die Hauptdrehachse 15 angeordnet ist. Das Kippmoment 13 ist beispielsweise durch Unwuchten am Generatorrotor 12 hervorrufbar, durch die sich wiederum Kreiselkräfte ergeben. Ebenso ist die Lageranordnung 40 durch die Kegelgleitlager 42 auch dazu geeignet, Axialkräfte 18 und/oder Radialkräfte 19 aufzunehmen, die sich im Betrieb des Generatorrotors 12 ergeben. Folglich sind sämtliche typischen zu erwartenden Beanspruchungen, die sich im Betrieb der Generatoreinheit 10 einstellen, mit einem Lagertyp, also den Kegelgleitlagern 42, aufnehmbar. Die Kegelgleitlager 42 weisen eine gesteigerte Fähigkeit auf, Kippmomente 13 aufzunehmen. Aus den Kippmomenten 13 resultierende Radialauslenkungen 23 des Generatorrotors 12 sind durch die Lageranordnung 40 reduziert. Zwischen dem Generatorrotor 12 und einem Generatorstator 14 ist dadurch ein verringerter Generatorluftspalt 16 ausbildbar. Der Generatorluftspalt 16 hat eine reduzierte Luftspalthöhe 17. Infolgedessen sind Verluste bei der Elektrizitätserzeugung in der Generatoreinheit 10 verringert.

Der Generatorrotor 12 ist auf der Rotorwelle 10 fliegend gelagert. Dementsprechend erfolgt ein Einwirken von Axialkräften 18, Radialkräften 19 und/oder Kippmomenten 13 über das Befestigungsmittel 22, das in Axialrichtung 36 außerhalb des Lagers 41 positioniert ist. Die Lageranordnung 40 ist auch dazu geeignet, im bestimmungemäßen Betrieb Axialkräfte 18 und/oder Radialkräfte 19, die über das Sonnenrad 24 auf die Rotorwelle 10 ausgeübt werden, aufzunehmen und in das Gehäuse 31 einzuleiten. Durch die erhöhte mechanische Beanspruchbarkeit der Lageranordnung 40 sind Radialauslenkungen 23 des Sonnenrads 24 reduziert. Auch bei erhöhten Drehzahlen des Generatorrotors 12 sind so übermäßige Beanspruchungen der Planetenstufe 33 vermeidbar. Die Lageranordnung 40 ist in einem Generatorgetriebe 50 einsetzbar, das zur Verwendung in einer Windkraftanlage 70 geeignet ist. Ferner ist die Lageranordnung 40 in einem Computerprogrammprodukt 80 abgebildet, das zu einem Simulieren des Betriebsverhaltens der Lageranordnung 40 ausgebildet ist.

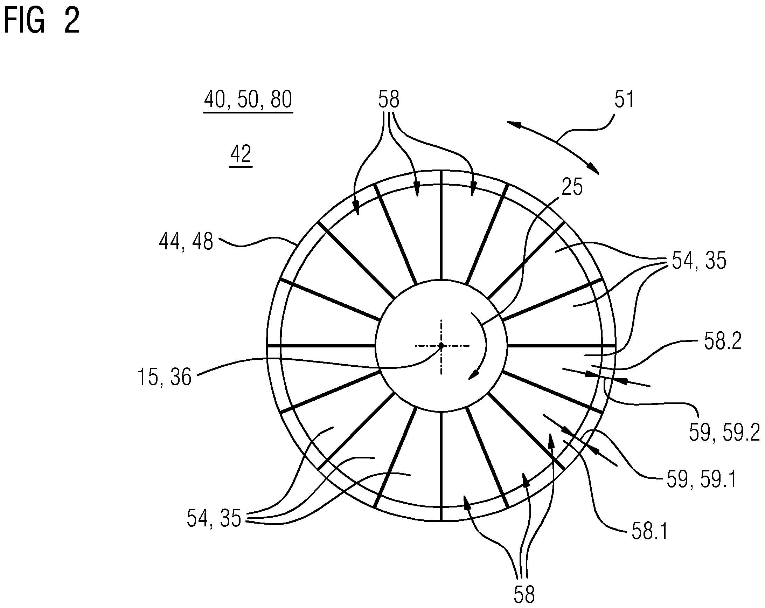

Eine äußere Lagerhülse 44 für ein Kegelgleitlager 42 in einer zweiten Ausführungsform der beanspruchten Lageranordnung 40 ist in FIG 2 in einer Stirnansicht dargestellt. Um die Hauptdrehachse 15 der Lageranordnung 15 herum angeordnet umfasst die äußere Lagerhülse 44 eine Mehrzahl an Segmenten 58. Die Segmente 58 sind im Wesentlichen trapezförmig ausgebildet und einer Umfangsrichtung 51 folgend gewölbt ausgebildet. Die Oberflächen der Segmente 58 bilden zusammen eine Innenfläche 56 der äußeren Lagerhülse 44, die im bestimmungsgemäßen Betrieb mit Schmierstoff 35 benetzt ist. Ferner sind die Segmente 44 dazu ausgebildet, eine innere Lagerhülse 46 in eine Axialrichtung 36 abzustützen die sich in FIG 2 in die Zeichenebene erstreckt. Die Segmente 58 bilden dadurch mit ihren Innenflächen 54 eine Kegelstumpfform 48. Die Segmente 58 sind separat herstellbar, so dass eine Montage der äußeren Lagerhülse 44 vereinfacht. Darüber hinaus weisen die Segmente 58 jeweils eine Segmentdicke 59 auf. Ein erstes Segment 58.1 weist eine erste Segmentdicke 59.1 auf, die sich von einer zweiten Segmentdicke 59.2 eines benachbart angeordneten zweiten Segments 58.2 unterscheidet. Infolgedessen ist am ersten Segment 58.1 eine Schmierstofffilmdicke 45 ausbildbar, die von einer Schmierstofffilmdicke 45 am zweiten Segment 58.2 abweicht. Das Gleitverhalten in einer Lageranordnung 40 mit einer entsprechenden äußeren Lagerhülse 44 ist folglich durch Anpassung einzelner Segmente 58 insgesamt einstellbar. Die Lageranordnung 40 ist in einem Generatorgetriebe 50 einsetzbar, das zur Verwendung in einer Windkraftanlage 70 geeignet ist. Ferner ist die Lageranordnung 40 in einem Computerprogrammprodukt 80 abgebildet, das zu einem Simulieren des Betriebsverhaltens der Lageranordnung 40 ausgebildet ist.

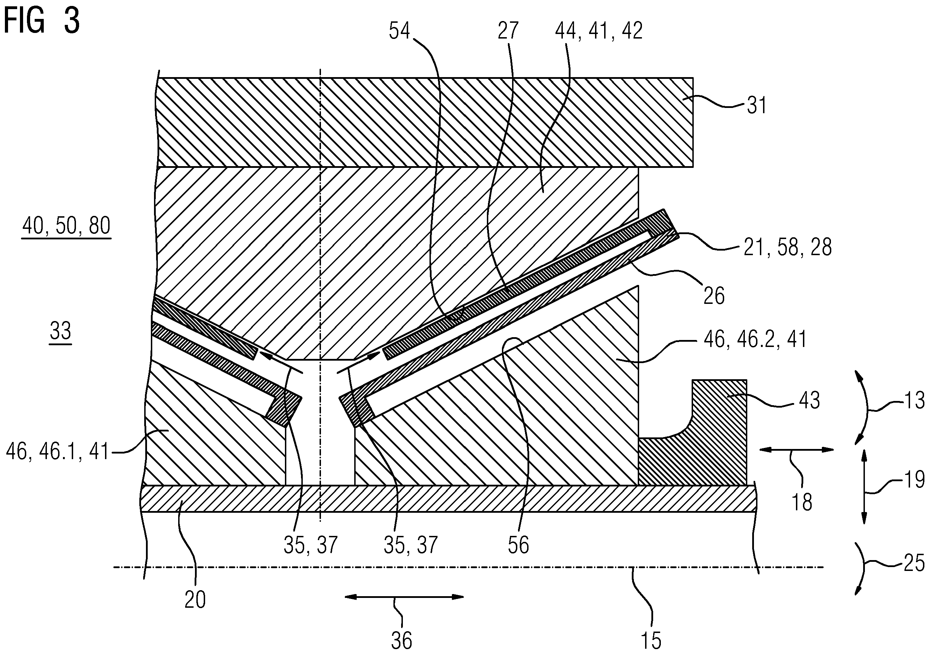

FIG 3 zeigt schematisch eine Detailansicht einer dritten Ausführungsform der beanspruchten Lageranordnung 40 im Längsschnitt. Die inneren Lagerhülsen 46, also die erste und zweite innere Lagerhülse 46.1, 46.2, umfasst jeweils eine Mehrzahl an Segmenten 58, die jeweils als Federsegmente 21 ausgebildet sind, die zusammen eine Außenfläche 56 der inneren Lagerhülsen 46 bilden. Durch einen Gleitarm 27 jeweils eines Federsegments 27 und eine Innenfläche 54 einer korrespondierenden äußeren Lagerhülse 44 wird ein Zwischenraum gebildet, in dem durch Schmierstoff 35 in Schmierstofffilm 37 gebildet wird. Das Federsegment 21 ist dazu ausgebildet, im Wesentlichen senkrecht zur Innenfläche 54 der äußeren Lagerhülse 44 eine Federkraft auszuüben und sich entsprechend zu elastisch zu verformen. Dadurch wird bei einem Kippmoment, das auf die innere Lagerhülse 46 ausgeübt wird, ein Ausweichen des Federsegments 21 gewährleistet und zwischen der Innenfläche 54 einer äußeren Lagerhülse 44 und einer Außenfläche 56 einer inneren Lagerhülse 46 ein Kantentragen vermieden. Das Federsegment 21 umfasst auch einen Biegearm 26, der an einem Ende mit der inneren Lagerhülse 46 und an einem entgegengesetzten Ende mit dem Tragarm 27 verbunden ist. Das Federsegment 21 ist folglich als sogenanntes Doppelbiegesegment 28 ausgebildet. Das Federsegment 21, also das Doppelbiegesegment 28, ist als Ringelement ausgebildet. Der Biegegarm 26 ist aus einem Werkstoff mit vorteilhaften elastischen Eigenschaften, beispielsweise einem Federstahl, herstellbar. Der Tragarm 27 hingegen ist aus einem Werkstoff mit vorteilhaften Gleiteigenschaften, beispielsweise einer Kupferlegierung, herstellbar. Das Federsegment 21 erlaubt so einen bedarfsgerechten Werkstoffeinsatz und bietet dadurch einen verschleißarmen und zuverlässigen Betrieb. Die Lageranordnung 40 ist in einem Generatorgetriebe 50 einsetzbar, das zur Verwendung in einer Windkraftanlage 70 geeignet ist. Ferner ist die Lageranordnung 40 in einem Computerprogrammprodukt 80 abgebildet, das zu einem Simulieren des Betriebsverhaltens der Lageranordnung 40 ausgebildet ist.

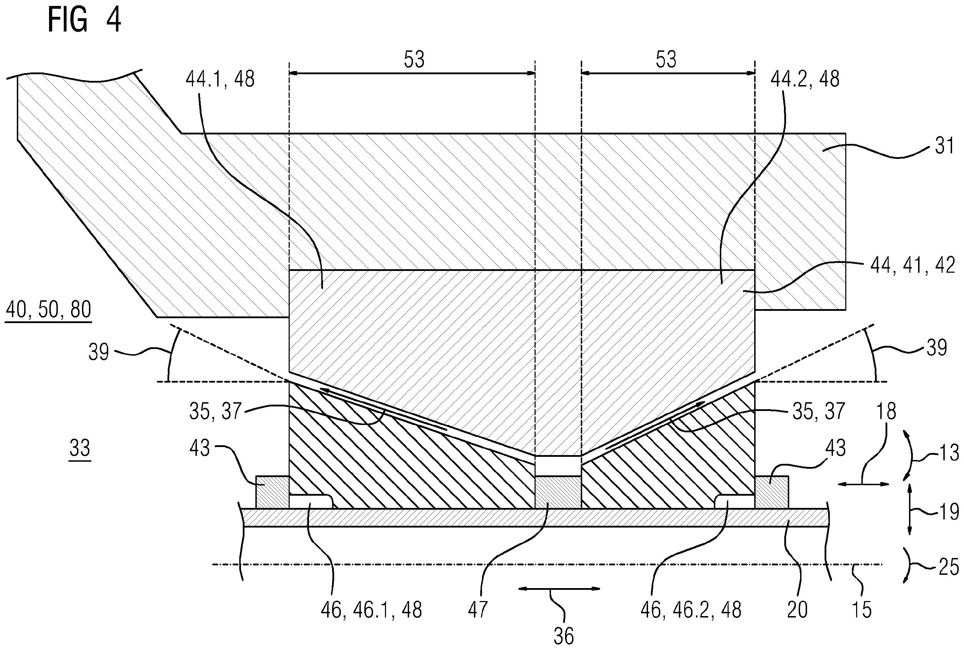

Eine vierte Ausführungsform der beanspruchten Lageranordnung 40 ist in FIG 4 in einem Längsschnitt dargestellt. Der Aufbau nach FIG 4 korrespondiert weitestgehend mit dem nach FIG 1. In der vierten Ausführungsform der beanspruchten Lageranordnung 40 ist das Lager 41 als Kegelgleitlager 42 mit einer äußeren Lagerhülse 44 ausgebildet, die einstückig die erste und zweite äußere Lagerhülse 44.1, 44.2 umfasst. Die erste und zweite äußere Lagerhülse 44.1, 44.2 bilden entlang der Axialrichtung 36 Abschnitte der äußeren Lagerhülse 44. Die erste äußere Lagerhülse 44.1 weist dabei eine höhere Axiallänge 53 auf als die zweite äußere Lagerhülse 44.2 Ferner weist die erste äußere Lagerhülse 44.1 einen kleineren Kegelwinkel 39 auf als die zweite Lagerhülse 44.2. Die erste und zweite Lagerhülse 44.1, 44.2 weisen jeweils im Wesentlichen eine zweifache Kegelstumpfform 48 auf. Korrespondierend dazu umfasst das Kegelgleitlager 42 eine erste und eine zweite innere Lagerhülse 46.1, 46.2, die als separate Komponenten ausgebildet sind. Die erste und zweite innere Lagerhülse 46.1, 46.2 sind durch ein Distanzelement 47, das mit zwei Sicherungsmitteln 43 zusammenwirkt, in Axialrichtung 36 positioniert. Durch die unterschiedlichen Kegelwinkel 39 und die unterschiedlichen Axiallängen 53 an den jeweiligen inneren Lagerhülsen 46 ist das Stützverhalten des Kegelgleitlagers 42 richtungsabhängig einstellbar, also asymmetrisch gestaltbar. Je größer der Kegelwinkel 39 einer inneren Lagerhülse 46 ist, umso stärker wird diese zur Abstützung einer Axialkraft 18, durch die innere Lagerhülse 46 gegen die äußere Lagerhülse 44 gedrückt. Je geringer der Kegelwinkel ist, umso besser ist das entsprechende Kegelgleitlager 42 zum Abstützen einer Radialkraft 19 geeignet. Durch geeignete Auswahl der Axiallängen 53 der ersten und zweiten inneren Lagerhülse 46.1, 46.2 ist das Lager 41, also das Kegelgleitlager 42, auf eine in Betrieb zu erwartende Beanspruchung einstellbar. Die Lageranordnung 40 ist in einem Generatorgetriebe 50 einsetzbar, das zur Verwendung in einer Windkraftanlage 70 geeignet ist. Ferner ist die Lageranordnung 40 in einem Computerprogrammprodukt 80 abgebildet, das zu einem Simulieren des Betriebsverhaltens der Lageranordnung 40 ausgebildet ist.

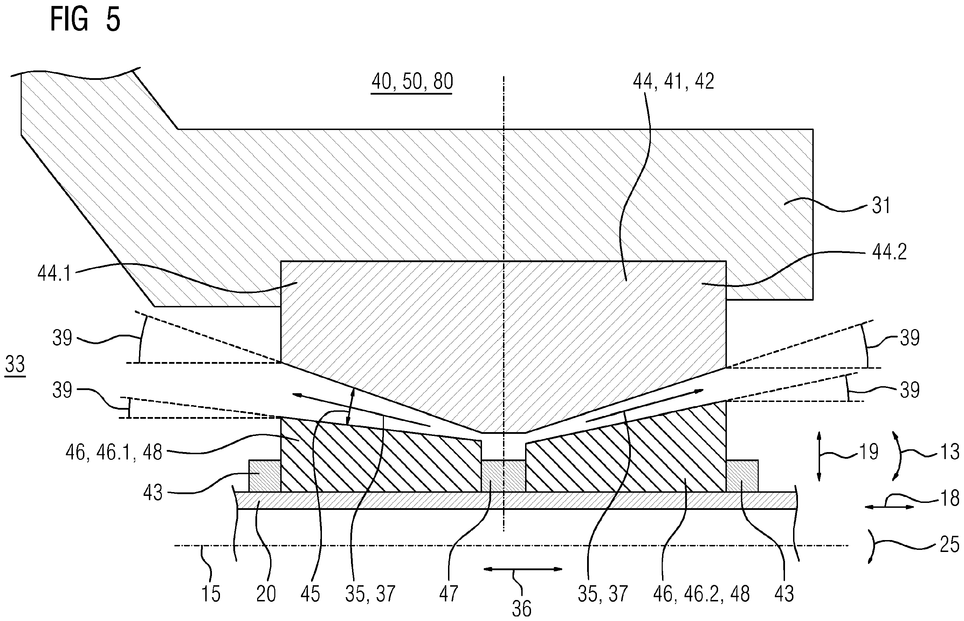

In FIG 5 ist eine fünfte Ausführungsform der beanspruchten Lageranordnung 40 in einer Detailansicht im Längsschnitt schematisch abgebildet. Der Aufbau nach FIG 5 korrespondierte weitestgehend mit dem nach FIG 1. Die einstückig ausgebildete äußere Lagerhülse 44 weist an ihren kegelförmigen Abschnitten, also jeweils an der ersten und zweiten Lagerhülse 44.1, 44.2, einen Kegelwinkel 39 auf. Die Kegelwinkel 39 an der ersten und zweiten äußeren Lagerhülse 44.1, 44.2 sind unterschiedlich. Ferner weisen auch die korrespondierend angeordnete erste und zweite innere Lagerhülse 46.1, 46.2 unterschiedliche Kegelwinkel 39 auf. Die Kegelwinkel 39 der ersten äußeren Lagerhülse 44.1 und der radial gegenüberliegend angeordneten ersten inneren Lagerhülse 46.1 sind ebenfalls zueinander unterschiedlich. Die Kegelwinkel 39 an der ersten inneren Lagerhülse 46.1 und der ersten äußeren Lagerhülse 44.1 sind derart ausgebildet, dass ein Verkippen infolge des Kippmoments 13 ermöglicht wird und dabei ein Kantentragen vermieden wird. Ein solches Verkippen ist beispielsweise durch ein Kippmoment 13 hervorrufbar. Durch Wahl der entsprechenden Kegelwinkel 39 in der Lageranordnung 40 ist dessen Stützverhalten bei Beaufschlagung mit einem Kippmoment 13 bedarfsgerecht einstellbar. Die Lageranordnung 40 ist in einem Generatorgetriebe 50 einsetzbar, das zur Verwendung in einer Windkraftanlage 70 geeignet ist. Ferner ist die Lageranordnung 40 in einem Computerprogrammprodukt 80 abgebildet, das zu einem Simulieren des Betriebsverhaltens der Lageranordnung 40 ausgebildet ist.

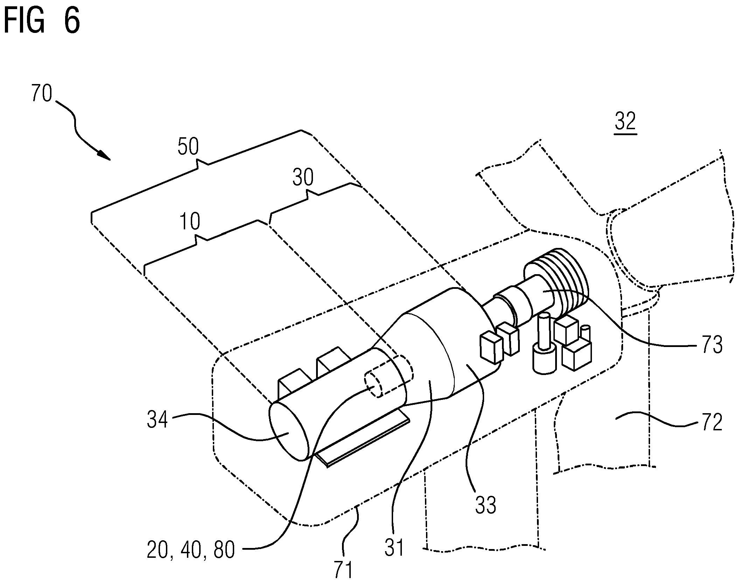

Eine Ausführungsform einer beanspruchten Windkraftanlage 70 ist schematisch in FIG 6 abgebildet. Die Windkraftanlage 70 umfasst eine Gondel 71, in der ein Generatorgetriebe 50 angeordnet ist, das drehmomentübertragend mit einer Hauptwelle 73 verbunden ist. Die Hauptwelle 73 wiederum ist drehmomentübertragend mit einem Mehrblattrotor 72 auf einer Antriebsseite 32 verbunden, der drehbar an der Gondel 71 befestigt ist. Das Generatorgetriebe 50 umfasst eine Generatoreinheit 10 auf einer Abtriebsseite 34 und eine Getriebeeinheit 30, die in einem gemeinsamen Gehäuse 31 angeordnet sind. Die Getriebeeinheit 30 umfasst zumindest eine Planetenstufe 33, durch die eine Drehzahl auf der Hauptwelle 73 zu einer erhöhten Drehzahl der Generatoreinheit 10 gewandelt wird. Im Generatorgetriebe 50 ist eine Lageranordnung 40 für eine Rotorwelle 10 aufgenommen, die nach einer der oben skizzierten Ausführungsformen ausgebildet ist.

## Patentansprüche

1. Lageranordnung (40) für eine Rotorwelle (20) einer Generatoreinheit (10), umfassend ein kippmomentaufnehmendes Lager (41) mit einer inneren und einer äußeren Lagerhülse (44, 46), das zu einem Aufnehmen eines auf einen Generatorrotor (12) einwirkenden Kippdrehmoments (13) ausgebildet ist, **dadurch gekennzeichnet, dass** das Lager (41) als Kegelgleitlager (42) ausgebildet ist.

2. Lageranordnung (40) nach Anspruch 1, **dadurch gekennzeichnet, dass** das Lager (41) zu einem Abstützen von Axialkräften (18) und/oder Radialkräften (19) ausgebildet ist.

3. Lageranordnung (40) nach Anspruch 1 oder 2, **dadurch gekennzeichnet, dass** das Kegelgleitlager (42) eine erste und zweite innere Lagerhülse (46.1, 46.2) und eine erste und zweite äußere Lagerhülse (44.1, 44.2) aufweisen.

4. Lageranordnung (40) nach einem der Ansprüche 1 bis 3, **dadurch gekennzeichnet, dass** die erste und zweite innere Lagerhülse (46.1, 46.2) jeweils als aufeinander weisende Kegel und/oder Kegelstümpfe (48) ausgebildet sind.

5. Lageranordnung (40) nach einem der Ansprüche 1 bis 4, **dadurch gekennzeichnet, dass** zumindest eine innere oder äußere Lagerhülse (44, 46) eine Mehrzahl von umlaufend angeordneten Segmenten (58) aufweist, die die innere bzw. äußere Lagerhülse (44, 46) bilden.

6. Lageranordnung (40) nach Anspruch 5, **dadurch gekennzeichnet, dass** zumindest zwei benachbarte Segmente (58) zu einem Ausbilden unterschiedlicher Schmierstofffilmdicken (45) und/oder Schmierkeile ausgebildet sind.

7. Lageranordnung (40) nach Anspruch 5 oder 6, **dadurch gekennzeichnet, dass** zumindest eines der umlaufend angeordneten Segmente (58) als senkrecht zu einem Schmierstofffilm (37) elastisches Federsegment (21) ausgebildet ist.

8. Lageranordnung (40) nach einem der Ansprüche 5 bis 7, **dadurch gekennzeichnet, dass** zumindest eines der Segmente (58) als Doppelbiegesegment (28) mit zumindest zwei in einem Randbereich verbundenen Ringelementen ausgebildet ist.

9. Lageranordnung (40) nach einem der Ansprüche 1 bis 8, **dadurch gekennzeichnet, dass** eine innere Lagerhülse (46) an ihren Außenflächen (56) und/oder eine äußere Lagerhülse (44) an ihrer Innenfläche (54) ovalisiert ausgebildet ist.

10. Lageranordnung (40) nach einem der Ansprüche 1 bis 9, **dadurch gekennzeichnet, dass** die Rotorwelle (20) in der Lageranordnung (40) fliegend gelagert ist.

11. Lageranordnung (40) nach einem der Ansprüche 3 bis 10, **dadurch gekennzeichnet, dass** die erste und zweite innere Lagerhülse (46.1, 6.2) unterschiedliche Kegelwinkel (39) aufweisen.

12. Lageranordnung (40) nach einem der Ansprüche 1 bis 11, **dadurch gekennzeichnet, dass** die Rotorwelle (20) mit dem Generatorrotor (12) verbunden ist, wobei der Schwerpunkt des Generatorrotors (12) axial innerhalb des Kegelgleitlagers (42) liegt.

13. Generatorgetriebe (50), umfassend eine Getriebeeinheit (30), die in einem Gehäuse (31) mit einer Generatoreinheit (10) mit einem Generatorrotor (12) angeordnet ist, wobei der Generatorrotor (12) drehfest auf einer Rotorwelle (20) angebracht ist, **dadurch gekennzeichnet, dass** die Rotorwelle (20) in einer Lageranordnung (40) nach einem der Ansprüche 1 bis 12 drehbar aufgenommen ist.

14. Generatorgetriebe (50) nach Anspruch 13, **dadurch gekennzeichnet, dass** das Generatorgetriebe (50) eine Strombelastbarkeit von mindestens dem 20-fachen bis 60-fachen eines mechanisch substitutionsfähigen Referenzwälzlagers aufweist.

15. Windkraftanlage (70), umfassend eine Gondel (71), an der drehbar ein Mehrblattrotor (72) angeordnet ist, der über eine Hauptwelle (73) drehmomentübertragend mit einem Generatorgetriebe (50) verbunden ist, **dadurch gekennzeichnet, dass** das Generatorgetriebe (50) nach Anspruch 13 oder 14 ausgebildet ist.

16. Computerprogrammprodukt (80) zu einem Simulieren eines Betriebsverhaltens einer Lageranordnung (40), die in einer Windkraftanlage (70) eingesetzt wird, **dadurch gekennzeichnet, dass** die Lageranordnung (40) nach einem der Ansprüche 1 bis 12 ausgebildet ist.
